# EUROPEAN PATENT APPLICATION

(11) **EP 1 897 655 A1**
(43) Date of publication of application: **12.03.2008**
(21) Application number: 07017601.1
(22) Date of filing: 07.09.2007
(51) Int. Cl.: B23Q 1/00, B23Q 1/62

(54) **Machine tool with bundle of supplying hoses**

(30) Priority: 08.09.2006 JP 2006244669
(71) Applicant: Mori Seiki Co., Ltd., Yamatokoriyama-shi, Nara-ken 639-1183 (JP)
(72) Inventor: Yamane, Masahiro, Yamatokoriyama-shi Nara-ken 639-1183 (JP); Nishi, Syuichi, Yamatokoriyama-shi Nara-ken 639-1183 (JP)
(74) Representative: Grünecker, Kinkeldey, Stockmair & Schwanhäusser Anwaltssozietät

(57) **Abstract**

A machine tool capable of absorbing expansion/contraction of a bundle of supplying hoses caused together with the movement of the ram in the Y-axis direction without increasing the size of the entire machine, is provided, in which a turret 5 includes a base member 8 disposed on a bed 2 in a movable manner in a Z-axis direction, a slide base 9 disposed on the base member 8 in a movable manner in an X-axis direction, a ram 11 disposed on the slide base 9 in a movable manner in a Y-axis direction being orthogonal to a plane including the X-axis and the Z-axis, and a turret body 12 mounted to the ram 11, and in which a bundle of supplying hoses 15 supplying electric power, coolant and oil pressure from the said bed 2 side to the turret body 12 is cabled to extend from the turret body 12 side through the ram 11 in the Y-axis direction by being bent in a direction crossing the Y-axis under the ram 11 to further extend in the crossing direction.

## Description

### BACKGROUND OF THE INVENTION

### 1. FIELD OF THE INVENTION

The present invention relates to a machine tool equipped with a spindle headstock gripping and rotating a workpiece and a turret having many tools radially disposed thereto on a bed thereof.

### 2. DESCRIPTION OF THE RELATED ART

As a conventional machine tool provided with a turret, there is one including a slant-type bed having a slant face slanting in a manner that a near side thereof becomes lower when viewed from a front side of the machine, a spindle headstock disposed at one side portion of the bed, a first turret disposed at a lower portion positioned at a near side of the slant face, and a second turret disposed at a higher portion positioned at a distant side of the slant face.
[Patent document 1] EP Patent No. 0538515B1

In the above-described machine tool provided with the slant-type bed, when structuring the turret to be movable in a Y-axis direction being orthogonal to a plane including an X-axis and a Z-axis (plane in parallel with the slant face), it is necessary that expansion/contraction in the Y-axis direction of the bundle of supplying hoses for supplying the turret body with power, coolant and the like, which is caused along with a movement of the turret in the Y-axis direction, be structured to be absorbable. As in the case of the one described in Patent document 1, as for a second turret disposed at a higher portion of the slant face, the structure capable of absorbing the expansion/contraction of the bundle of supplying hoses in the Y-axis direction as it is can be provided at a back face side of the bed. However, as for the bundle of supplying hoses disposed at the lower portion of the slant face, when trying to ensure a space to absorb the expansion/contraction of the bundle of supplying hoses in the Y-axis direction as it is at the back face side, a problem of increasing the entire machine in size possibly arises.

### SUMMARY OF THE INVENTION

The present invention has been made in consideration of the above-described conventional circumstances, and an object thereof is to provide a machine tool capable of absorbing expansion/contraction of a bundle of supplying houses caused along with a movement of a ram in a Y-axis direction without increasing the entire machine in size.

In the present invention, a machine tool includes a bed, a spindle headstock disposed on the bed, and a turret disposed on the bed in a movable manner in an X-axis direction being orthogonal to an axis line of the spindle headstock and a Z-axis direction being in parallel with the axis line, in which the turret is provided with a base member disposed on the bed in a movable manner in the Z-axis direction, a slide base disposed on the base member in a movable manner in the X-axis direction, a ram disposed on the slide base in a movable manner in a Y-axis direction being orthogonal to a plane including the X-axis and the Z-axis, and a turret body mounted to the ram, and in which a bundle of supplying hoses supplying at least one of electric power, coolant and oil pressure from the bed side to the turret body is cabled to extend from the turret body side through the ram in the Y-axis direction by being bent in a direction crossing the Y-axis under the ram to further extend in the crossing direction.

In the present invention, the slide base is disposed in a movable manner in the X-axis direction on the base member disposed on the bed in a movable manner in the Z-axis direction, and the ram is disposed on the slide base in a movable manner in the Y-axis direction with the bundle of supplying hoses connected to the turret body being mounted thereto, in which the bundle of supplying hoses is cabled to extend from the turret body side through the ram in the Y-axis direction by being bent in the direction crossing the Y-axis under the ram to further extend in the crossing direction, allowing the expansion/contraction of the bundle of supplying hoses in the Y-axis direction caused by the movement of the ram and further of the turret body in the Y-axis direction to be converted into the expansion/contraction in the direction crossing the Y-axis, so that the space to absorb the expansion/contraction of the bundle of supplying hoses in the Y-axis direction can be ensured almost without increasing the size of the entire machine in the Y-axis direction. As a result, the size in the Y-axis direction in view of the entire machine can be made compact with almost no protrusion of the bundle of supplying hoses in the Y-axis direction.

In a preferred embodiment according to the present invention, one end of the bundle of supplying hoses is connected to the turret body side and an other end is inserted through the ram and bent in the Z-axis direction under the ram to further extend in the Z-axis direction, and the end of the extended portion is supported by one end portion of the slide base in the Z-axis direction.

In the embodiment describing the above characteristics, the one end of the bundle of supplying hoses is connected to the turret body side and the other end is extended to under the ram by being inserted through the ram and bent in the Z-axis direction under the ram to further extend in the Z-axis direction, and the end of the extended portion is connected to the one end portion of the slide base in the Z-axis direction, allowing the expansion/contraction of the supplying hoses in the Y-axis direction caused by the movement of the ram in the Y-axis direction to be converted into the expansion/contraction in the Z-axis direction, in which the turret has a larger moving stroke amount, so that the expansion/contraction is absorbed in the Z-axis direction. Accordingly, the space to absorb the expansion/contraction of the bundle of supplying hoses can be ensured more surely without increasing the entire machine in size, so that the expansion/contraction of the bundle of supplying hoses can be absorbed easily and surely.

In another preferred embodiment according to the present invention, a guide plate guiding the bundle of supplying hoses toward the crossing direction is disposed under the ram.

In the embodiment describing the above characteristics, the guide plate guiding the bundle of supplying hoses toward the crossing direction is disposed under the ram, allowing the expansion/contraction of the bundle of supplying hoses in the Y-axis direction to be converted into the crossing direction more surely, so that the expansion/contraction of the bundle of supplying hoses in the Y-axis direction can be absorbed more easily and surely.

In still another preferred embodiment according to the present invention, the bed is a slant-type bed having a slant face slanting in a manner that a near side thereof becomes lower when viewed from a front of the machine, in which the turret is disposed at a lower portion positioned at the near side of the slant face of the bed in a movable manner in the X-axis, Y-axis and Z-axis directions, and in which one end of the bundle of supplying hoses is connected to the turret body side and an other end is inserted through the ram and bent in the Z-axis direction under the ram to further extend in the Z-axis direction, and the end of the extended portion is supported by one end portion of the slide base in the Z-axis direction.

In the embodiment describing the above characteristics, the turret is disposed on the slant-type bed, the one end of the bundle of supplying hoses is connected to the turret body side, the other end is inserted through the ram and bent in the Z-axis direction under the ram, and the end of the extended portion is connected to the one end portion of the slide base in the Z-axis direction, in which the expansion/contraction of the bundle of supplying hoses in the Y-axis direction caused by the movement of the ram in the Y-axis direction is converted into the expansion/contraction in the Z-axis direction, so that the bundle of supplying hoses can be prevented from protruding to the back face side and the turret can be disposed at the lower portion positioned at the near side of the slant face in a movable manner in the Y-axis direction.

### BRIEF DESCRIPTION OF THE DRAWINGS

FIG. 1 is a front perspective view of a turret lathe according to one embodiment of the present invention;
FIG. 2 is a left side view of the lathe;
FIG. 3 is a right side view of the lathe;
FIG. 4 is a plan view of a first turret portion of the lathe;
FIG. 5 is a front sectional view (a sectional view taken along a V-V line in FIG. 4) of the first turret portion of the lathe;
FIG. 6 is a sectional side view to illustrate an attachment/detachment work of the first Y-axis driving unit of the first turret of the lathe;
FIG. 7 is a sectional front view showing a mounted state of the first Y-axis driving unit of the first turret of the lathe; and
FIG. 8 is a perspective view showing a mounted state of the first Y-axis driving unit of the first turret of the lathe.

### DETAILED DESCRIPTION OF THE PREFERRED EMBODIMENTS

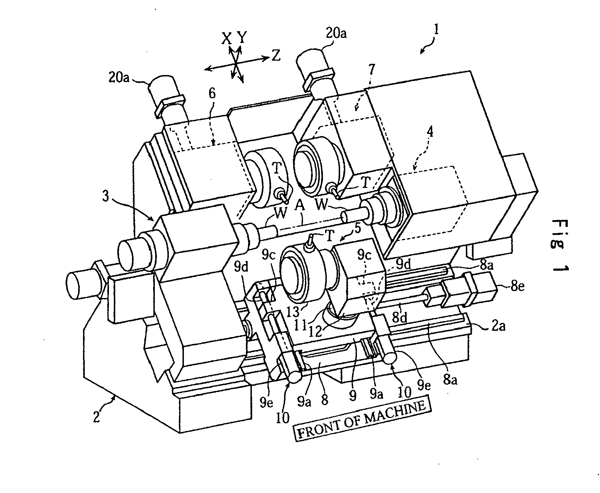

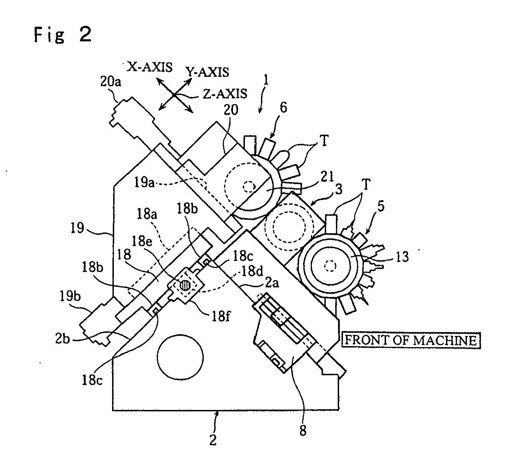

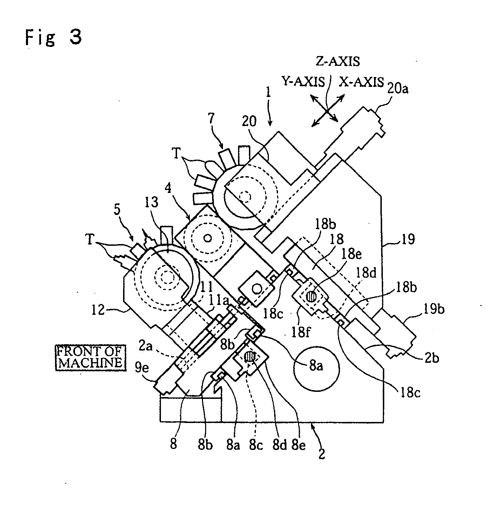

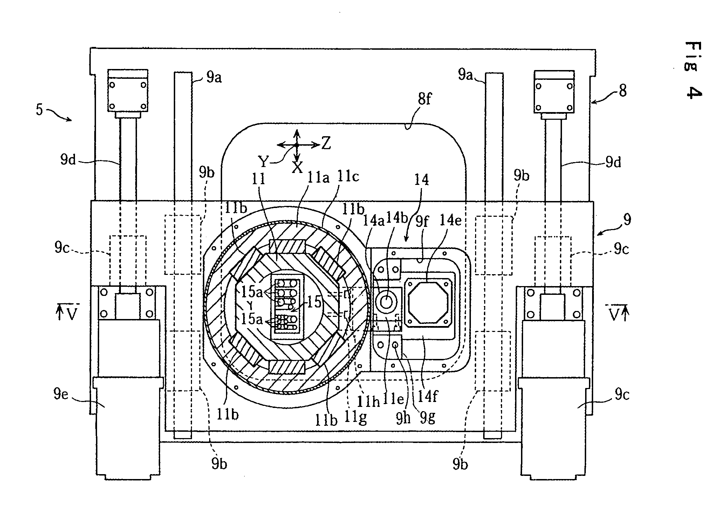

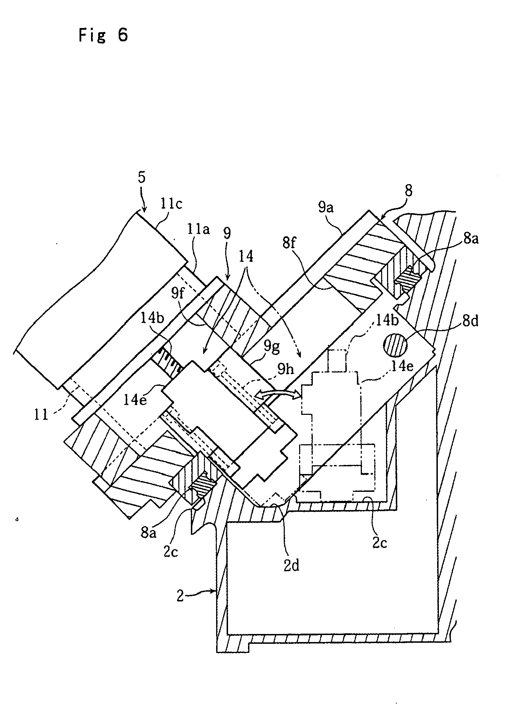

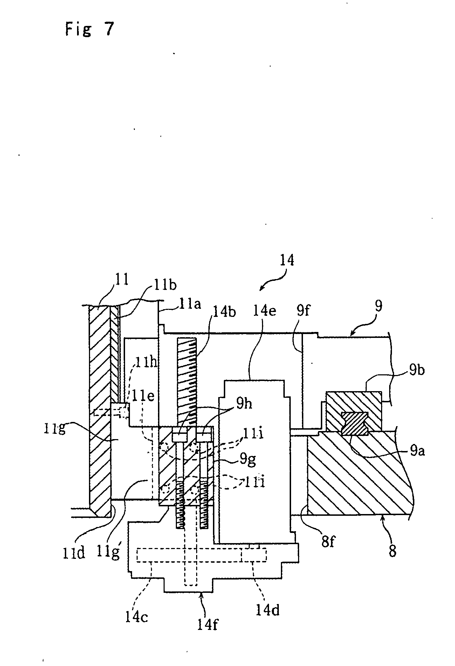

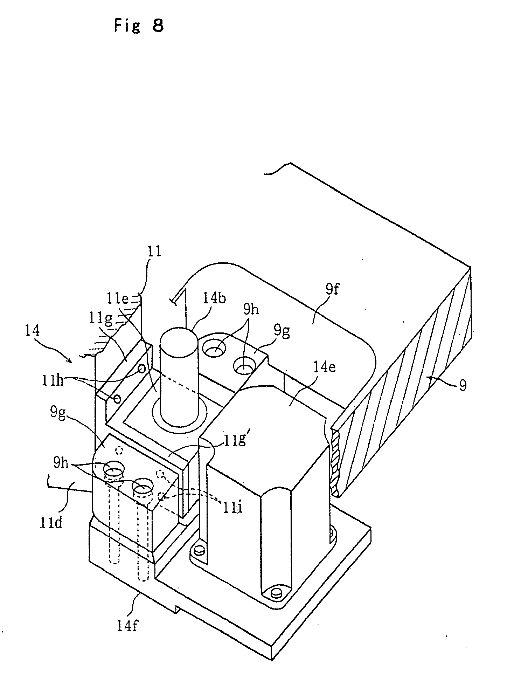

Hereinafter, embodiments of the present invention will be described with reference to the attached drawings. FIG. 1 to FIG. 8 are views to illustrate a turret lathe according to one embodiment of the present invention.

In the drawings, "1" denotes a turret lathe according to one embodiment of the present invention, and the turret lathe 1 includes a slant-type bed 2 slanting in a manner that the near side thereof becomes lower when viewed from the front of a machine, a first spindle headstock 3 disposed at the left side portion of the bed 2, a second spindle headstock 4 disposed at the right side portion in a movable manner in the Z-axis direction to be coaxial with the first spindle headstock 3, a first turret 5 disposed at the lower portion positioned at the near side of the bed 2 in a movable manner in the X-axis, Y-axis and Z-axis directions, and second and third turrets 6, 7 disposed at the higher portion positioned at the distant side of the bed 2 in a movable manner in the X-axis, Y-axis and Z-axis directions.

Here, the X-axis is a direction orthogonal to an axial line A of the first and second spindle headstocks 3, 4 and in parallel with a later-described first slant face 2a, meaning a front and rear direction when viewed from the machine front. Further, the Z-axis is a direction in parallel with the axial line A, meaning a right and left direction when viewed from the machine front. Furthermore, the Y-axis is a direction orthogonal to a plane including the X-axis and the Z-axis, meaning a direction orthogonal to the first slant face 2a.

The bed 2 is shaped into substantially a right-angle triangle when viewed from the right or left side direction toward the Z-axis direction and includes the first slant face 2a positioned at the near side when stood in front of the machine and a second slant face 2b positioned at the rear side and orthogonal to the first slant face 2a. The first turret 5 is disposed on the first slant face 2a in a movable manner in the directions in parallel with the first slant face 2a and orthogonal to the first slant face 2a. Further, the second and third turrets 6, 7 are disposed on the second slant face 2b in a movable manner in the directions in parallel with the second slant face 2b and orthogonal to the second slant face 2b.

Since the second turret 6 and the third turret 7 have substantially the same structure, the same numerical references are used for the same or corresponding portions, and the description will be given mainly of the structure of the second turret 6.

The second turret 6 includes: a base member 18 disposed on the second slant face 2b of the bed 2 in a movable manner in the Z-axis direction, a column 19 disposed on a slide face 18a being in parallel with the second slant face 2b of the base member 18 in a movable manner in the Y-axis direction, a turret body 20 disposed on a slide face 19a being in parallel with the first slant face 2a of the column 19 in a movable manner in the X-axis direction, and a turret head 21 disposed in a rotary indexable manner to the turret body 20 and having many tools T.

The base member 18 moves forward and backward by fitting the linear guides 18b fixed thereto to linear guide rails 18c, 18c fixed onto the second slant face 2b extending in the Z-axis direction in a freely slidable manner, and at the same time, by inserting a ball screw 18e in a screwing manner into a nut member 18d fixed to the base member 18 and by driving the ball screw 18e to rotate by a second Z-axis feed motor 18f fixed to the second slant face 2b side.

The column 19 is driven to move forward and backward in the Y-axis direction by a second Y-axis feed motor 19b fixed to the base member 18 side. Further, the turret body 20 is driven to move forward and backward by a second X-axis feed motor 20a fixed to the column 19 side.

The first turret 5 includes: a base member 8 disposed on the first slant face 2a of the bed 2 in a movable manner in the Z-axis direction, a slide base 9 disposed on the base member 8 in a movable manner in the X-axis direction, a pair of right and left first X-axis feed mechanisms 10, 10 moving the slide base 9 in the X-axis direction, a ram 11 disposed at the portion of the slide base 9 and between the pair of feed mechanisms 10, 10 in a movable manner in the Y-axis direction, a turret body 12 mounted onto the ram 11, and a turret head 13 mounted onto the turret body 12.

The turret head 13 is a thick plate of a polygonal shape with a variety of tools T mounted onto the outer peripheral portion thereof. The turret body 12 has a built-in indexing mechanism indexing and thereby positioning the turret head 13 so that a predetermined tool is positioned at a processing position and a built-in driving mechanism driving the respective tools. Accordingly, as will be described later, a bundle of supplying hoses 15 composed of a power supply cable, and hoses for supplying coolant and oil pressure, and the like is connected to the turret body 12.

The structure of the first turret 5 will be described in more detail. A pair of linear guide rails 8a, 8a extending in the Z-axis direction are fixedly disposed at the lower portion positioned at the near side of the first slant face 2a of the bed 2, and linear guides 8b, 8b fixed to the bottom face of the base member 8 are fitted to the linear guide rails 8a, 8a in a freely slidable manner. Further, a ball screw 8d extending in the Z-axis direction is screwed into a nut member 8c fixed to the bottom face of the base member 8. A first Z-axis feed motor 8e is connected to the right end portion of the ball screw 8d, and the motor 8e is fixed to the first slant face 2a side of the bed 2. By the rotation of the first Z-axis feed motor 8e, the base member 8 moves forward and backward in the Z-axis direction.

A pair of linear guide rails 9a, 9a extending in the X-axis direction are fixedly disposed onto the base member 8 and right and left linear guides 9b, 9b fixed to the bottom surface of the slide base 9 are fitted in a freely slidable manner thereto. Further, in right and left side portions of the slide base 9, right and left nut members 9c, 9c are formed and ball screws 9d, 9d extending in the X-axis direction are screwed in the nut members 9c, 9c. First X-axis feed motors 9e, 9e are connected to the near-side end portions of the ball screws 9d, 9d, and the motors 9e, 9e are fixed to the base member 8 side. The above-described pair of right and left first X-axis feed mechanisms 10, 10 are composed of the right and left linear guide rails 9a, 9a, the right and left linear guides 9b, 9b, the right and left nut members 9c, 9c, the right and left ball screws 9d, 9d, and the right and left first X-axis feed motors 9e, 9e, respectively. By the rotation of the first X-axis feed motors 9e, 9e, the slide base 9 moves forward and backward in the X-axis direction.

A ram guide 11 a is disposed in a standing manner at the portion of the slide base 9 and between the right and left first X-axis feed mechanisms 10, 10 so as to protrude upward. The ram guide 11 a has a cylindrical shape and its outer peripheral face has a circular transverse section, and the ram 11 has a cylindrical shape and its outer peripheral face has an octagonal transverse section. Between the respective side portions forming the outer peripheral face of the ram 11 and the inner peripheral face of the ram guide 11a, sliders 11b being plural bearing members extending in the axial direction are inserted, and thereby, the ram 11 is supported by the slide base 9 in a slidable manner in the Y-axis direction to move in the X-axis direction and Z-axis direction together with the slide base 9.

The turret body 12 is fixed to the upper end portions of the ram 11. Further, a guide cover 11c of a cylindrical shape is attached to the ram guide 11 a in a freely slidable manner in the Y-axis direction, and the upper end portion of the cover 11c is fixed to the lower surface of the turret body 12. Thus, cutting dusts and coolants are prevented from entering into sliding surfaces of the ram 11 and the ram guide 11a.

Since the outer peripheral face of the ram guide 11a is the circle, the cutting dusts and the like easily slip down from the upper edge of the outer peripheral face of the ram guide 11 a despite the ram guide 11 a protruding from the slanting slant face 2a, so that the cutting dusts and the like are prevented from accumulating around the upper edge.

A first Y-axis driving unit 14 is coupled to a lower end portion 11d of the ram 11. In detail, a bracket 11g is clamped to be fixed to the lower end portion 11d by a bolt 11h, and a nut holder 11e holding a nut member 14a of the first Y-axis driving unit 14 is fixed to a flange portion 11g' protruding in the Z-axis direction of the bracket 11g by a mounting bolt 11i in an attachable/detachable manner. Further, a ball screw 14b extending in the Y-axis direction is screwed into the nut member 14a. A transmission gear 14c for transmitting torque is fixed to the lower end portion of the ball screw 14b, and a driving gear 14d fixed to an output shaft of a first Y-axis feed motor 14e is engaged with the transmission gear 14c. The ball screw 14b is supported by a casing 14f via a bearing 14g in a relatively rotatable manner and in an axially unmovable manner. Further, the first Y-axis feed motor 14e is fixedly supported by the casing 14f. The casing 14f is mounted onto a both portion 9g formed in the slide base 9 via mounting bolts 9h in an attachable/detachable manner.

Here, the ram 11, the ball screw 14b, and the Y-axis feed motor 14e are disposed in parallel with each other and in a state of inserted into an escape opening 8f formed in the base member 8. In other words, when viewed in the direction orthogonal to the Y-axis, the lower end portion 11d of the ram 11 and most part of the ball screw 14b and the Y-axis feed motor 14e are lapping each other, and further lapping the peripheral edge of the escape opening 8f.

Further, the nut member 14a including the nut holder 11e, the ball screw 14b including the casing 14f, the respective gears 14c, 14d and the Y-axis feed motor 14e compose the first Y-axis driving unit 14 moving the ram 11, and further the turret body 12 and the turret head 13 forward and backward in the Y-axis direction.

Here, the escape opening 8f formed in the base member 8 is shaped into substantially a square in plan view, and set to have a size not interfering the Y-axis driving unit 14 and the like even when the lower end portion 11d of the ram 11 and the first Y-axis driving unit 14 move to the extent of the maximum stroke in the X-axis direction of the slide base 9. Further, the escape opening 8f is set to have a size and a shape not interfering when standing and falling the unit 14 in a later-described accommodating recessed portion 2c when attaching/detaching the first Y-axis driving unit 14.

Further, the first Y-axis driving unit 14 is disposed in a maintenance opening 9f formed in the slide base 9 such that it is seeable from the above, so that the mounting bolts 9h of the slide base 9 of the first Y-axis driving unit 14 and the mounting bolts 11 of the bracket 11g of the nut holder 11e are attachable/detachable by inserting a tool from above the slide base 9.

At the right side portion of the first slant face 2a of the bed 2, the previously-described accommodating recessed portion 2c is formed. The accommodating recessed portion 2c is for a temporal accommodation at the time of the attachment/detachment works of the first Y-axis driving unit 14, and formed to have a shape, a depth and the like allowing for movement of the first turret 5 in the Z-axis direction while the first turret 5 is in the state of accommodating the unit 14. Further, a mounting portion 2d is formed in a neighboring manner to the accommodating recessed portion 2c, and when the first driving unit 14 is detached, it is temporarily placed on this mounting portion 2d.

Specifically, when detaching the first Y-axis driving unit 14, the mounting bolts 9h and the mounting bolts 11 i are removed and the first Y-axis driving unit 14 is temporarily placed on the mounting portion 2d in a slanting state, and subsequently, the first Y-axis driving unit 14 is made to stand up and the first turret 5 is moved in the Z-axis direction as it is. Backed by this, the accommodating recessed portion 2c and the first Y-axis driving unit 14 accommodated in the accommodating recessed portion 2c are exposed outside. In this state, it is possible to perform required maintenance by removing the first Y-axis driving unit 14 outside the machine. Note that the attachment work of the Y-axis driving unit 14 is performed in reverse order of the above detachment work.

The turret body 12 is connected with a bundle of supplying hoses 15 composed of many supplying hoses 15a, ... for supplying electric power, coolant and oil pressure necessary for an indexing mechanism and a tool driving mechanism built therein. The bundle of supplying hoses 15 goes through a through hole 11f of the ram 11, extends downward of the ram, bent in the Z-axis direction here, extends further in the Z-axis direction by going through between the base member 8 and the bed 2, makes a u-turn upward at the side of the base member 8, and fixed to the slide base 9 by a claming member 15b.

Further, under the ram 11, a guide plate 15c to be a guide when bending a bending portion 15g of the bundle of supplying hoses 15 from the Y-axis direction to the Z-axis direction is disposed. Further, under and at the side of a previously-described u-turn portion 15h of the bundle of supplying hoses 15, a guide plate 15d and a guide plate 15e of a u-shape to serve as a guide when making the u-turn portion 15 upwardly are disposed, respectively. These guide plates 15c to 15e are supported by the slide base 9 and move together with the slide base 9. Note that, as to the guide plate 15d, a shape along with a bent R of the bundle of supplying hoses 15 is also acceptable.

In the turret lathe 1 according to the present embodiment, the first turret 5 is movable in the X-axis and Y-axis directions and further in the Y-axis direction. In the first Y-axis driving unit 14, when the Y-axis feed motor 14e rotates the ball screw 14b via the gears 14d, 14c, the nut member 14a moves the ram.11 and further the turret body 12 and the turret head 13 in the Y-axis direction.

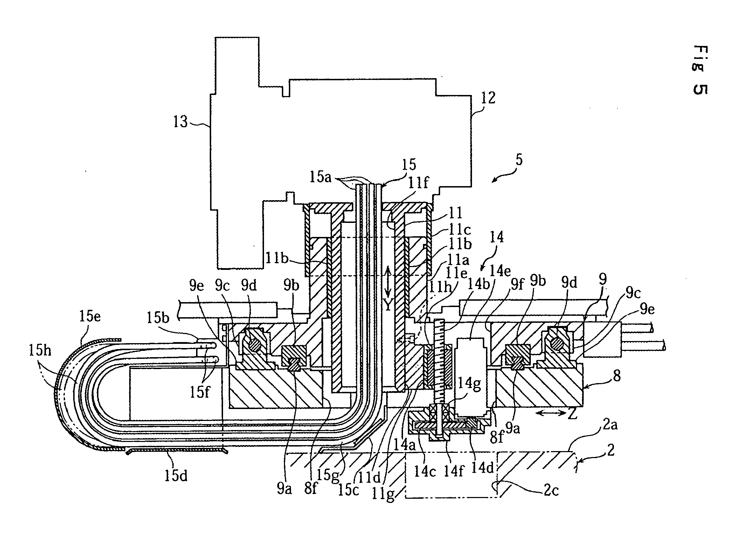

With the movement of the ram in the Y-axis direction, the bundle of supplying hoses 15 is caused to expand/contract in the Y-axis direction together with the turret body 12, however, the expansion/contraction in the Y-axis direction is converted into the expansion/contraction in the Z-axis direction via the bending portion 15g positioned under the ram and is absorbed by the u-turn portion 15h varying between a state shown by a solid line and a state shown by a chain double-dashed line in FIG. 5.

Thus, in the present embodiment, the expansion/contraction of the bundle of supplying hoses 15 in the Y-axis direction caused by the movement of the ram and further of the turret body 12 in the Y-axis direction can be converted into the expansion/contraction in the Z-axis direction and, hence, the space to absorb the expansion/contraction of the bundle of the supplying hoses 15 caused by the movement of the ram 11 in the Y-axis direction can be ensured almost without increasing the size of the entire machine in the Y-axis direction. As a result, the size in the Y-axis direction in view of the entire machine can be made compact almost without the protrusion of the bundle of supplying hoses 15 in the Y-axis direction.

Further, it is structured that the expansion/contraction of the bundle of supplying hoses 15 in the Y-axis direction caused by the movement of the ram 11 in the Y-axis direction is converted into the expansion/contraction in the Z-axis direction, in which the first turret 5 has a larger moving stroke amount, so that the space to absorb the expansion/contraction of the bundle of supplying hoses 15 can be ensured more surely.

Further, the guide plate 15c guiding the bundle of supplying hoses 15 toward the Z-axis direction and the guide plates 15d, 15e guiding it in the u-turn direction are disposed under the ram 11, so that the expansion/contraction of the bundle of supplying hoses 15 in the Y-axis direction can be converted into the expansion/contraction in the Z-axis direction more surely.

As described above, with the expansion/contraction of the bundle of supplying hoses 15 caused by the movement of the ram 11 in the Y-axis direction, the bundle of supplying hoses 15 can be prevented from protruding to the back face side of the bed, so that the first turret 5 can be disposed at the lower portion positioned at the near side of the slant face in a movable manner in the Y-axis direction.

Further, in the present embodiment, when disposing the ram 11 to be movable in the Y-axis direction, since the ram 11 is disposed between the right and left X-axis feed mechanisms 10, 10 requiring relatively large disposing spaces in the Y-axis direction, the ram 11 can be disposed without protruding to the back face side of the bed 2 by making use of the size in the Y-axis direction of the X-axis feed mechanisms 10, 10, and also the ram 11 can be disposed at the lower portion being the near side of the slant-type bed 2, which cannot afford enough space in view of the size from the near-side to the distant-side (in the Y-axis direction), while preventing the entire machine from increasing in size.

Further, the Y-axis driving unit 14 is positioned between the right and left X-axis feed mechanisms 10, 10, allowing the Y-axis driving unit 14 to be disposed by making use of the size of the X-axis feed mechanisms 10, 10 in the Y-axis direction, so that the entire machine can be prevented from increasing in size also from this viewpoint.

Note that, in the present embodiment, the description was given for the case where the expansion/contraction of the bundle of supplying hoses 15 in the Y-axis direction is converted into the expansion/contraction in the Z-axis direction orthogonal to the Y-axis, however, the present invention also includes the case where the expansion/contraction in the Y-axis direction is converted into the direction crossing the Y-axis, for example, the direction being diagonal with respect to the Z-axis direction, in addition to the direction orthogonal to the Y-axis.

Further, in the present embodiment, the description was given for the case of the lathe having the slant-type bed, however, the applicable scope of the present invention is not limited to the slant-type lathe, and is also applicable to any machine tool as long as the machine tool is provided with the turret structured that the ram thereof is movable in the direction orthogonal to the face of the bed.

The invention may be embodied in other specific forms without departing from the spirit or essential characteristics thereof.

The present embodiments are therefore to be considered in all respects as illustrative and no restrictive, the scope of the invention being indicated by the appended claims rather than by the foregoing description, and all changes which come within the meaning and range of equivalency of the claims are therefore intended to be embraced therein.

## Claims

1. A machine tool comprising: a bed; a spindle headstock disposed on said bed; and a turret disposed on said bed in a movable manner in an X-axis direction being orthogonal to an axis line of said spindle headstock and a Z-axis direction being in parallel with the axis line,
wherein said turret includes a base member disposed on said bed in a movable manner in the Z-axis direction, a slide base disposed on the base member in a movable manner in the X-axis direction, a ram disposed on the slide base in a movable manner in a Y-axis direction being orthogonal to a plane including the X-axis and the Z-axis, and a turret body mounted to the ram, and wherein a bundle of supplying hoses supplying at least one of electric power, coolant and oil pressure from the said bed side to the turret body is cabled to extend from the turret body side through the ram in the Y-axis direction by being bent in a direction crossing the Y-axis under the ram to further extend in the crossing direction.

2. The machine tool according to claim 1, wherein one end of the bundle of supplying hoses is connected to the turret body side and an other end thereof is inserted through the ram and bent in the Z-axis direction under the ram to further extend in the Z-axis direction, and the end of the extended portion is supported by one end portion of the slide base in the Z-axis direction.

3. The machine tool according to claim 1 or claim 2, wherein a guide plate guiding the bundle of supplying hoses toward the crossing direction is disposed under the ram.

4. The machine tool according to claim 1, wherein said bed is a slant-type bed having a slant face slanting in a manner that a near side thereof becomes lower when viewed from a front of said machine,
wherein said turret is disposed at a lower portion positioned at the near side of the slant face of said bed in a movable manner in the X-axis, Y-axis and Z-axis directions, and
wherein one end of the bundle of supplying hoses is connected to the turret body side and an other end thereof is inserted through the ram and bent in the Z-axis direction under the ram to further extend in the Z-axis direction, and the end of the extended portion is supported by one end portion of the slide base in the Z-axis direction.

5. The machine tool according to claim 2, wherein a guide plate guiding the bundle of supplying hoses toward the crossing direction is disposed under the ram.
